Europäisches Patentamt

European Patent Office

Office européen des brevets

(11) Veröffentlichungsnummer: **0 354 866**

A1

## (12) EUROPÄISCHE PATENTANMELDUNG

(21) Anmeldenummer: **89730154.5**

(22) Anmeldetag: **30.06.89**

(51) Int. Cl.⁵: **B 01 D 53/00**
B 01 D 53/14, B 01 D 5/00

(30) Priorität: **08.07.88 DE 3823665**

(43) Veröffentlichungstag der Anmeldung:
**14.02.90 Patentblatt 90/07**

(84) Benannte Vertragsstaaten:
**AT BE CH FR GB IT LI NL**

(71) Anmelder: **SCHWELM ANLAGEN- + APPARATEBAU GmbH**
**Loher Strasse 1**
**D-5830 Schwelm (DE)**

(72) Erfinder: **Herwig, Michel-Kim**
**Bamberger Strasse 41**
**D-1000 Berlin 30 (DE)**

(74) Vertreter: **Pfenning, Meinig & Partner**
**Kurfürstendamm 170**
**D-1000 Berlin 15 (DE)**

(54) **Verfahren und Vorrichtung zur Rückgewinnung von organischen Dämpfen aus Gasen.**

㊐ Es wird ein Verfahren und eine Vorrichtung zur Rückgewinnung von organischen Dämpfen aus Gasen, insbesondere von Benzindämpfen, vorgeschlagen, bei denen unter Verwendung eines Rieselkühlers die beladenen Gase bzw. Benzindämpfe im Gleichstrom von Gas und Waschflüssigkeit in einem Wäscher gewaschen werden, wobei die Abkühlung des Gas- und Waschflüssigkeitsgemisches im Gegenstrom im Wäscher erfolgt.

Fig. 1

EP 0 354 866 A1

**Beschreibung**

## Verfahren und Vorrichtung zur Rückgewinnung von organischen Dämpfen aus Gasen

Die Erfindung betrifft ein Verfahren zur Rückgewinnung von organischen Dämpfen aus Gasen, insbesondere von Benzindämpfen, nach dem Oberbegriff des Hauptanspruchs und eine Vorrichtung zur Durchführung des Verfahrens.

Die Rückgewinnung von organischen Dämpfen, beispielsweise Lösungsmitteldämpfen oder auch Benzindämpfen aus Gasen unter Einhaltung der TA-Luft, ist eine wichtige umwelttechnische und ökonomische Aufgabe. Es sind schon Verfahren zur Rückgewinnung bekannt, beispielsweise Adsorptionsverfahren mit Aktivkohle, Molekularsieben oder niedrig siedenden Adsorbtionsflüssigkeiten, zum Beispiel Kerosin, bei denen die adsorbierten Lösungsmittel mit Wärme oder Unterdruck ausgetrieben und anschließend auskondensiert werden. In jüngster Zeit werden auch Membranverfahren eingesetzt, wobei die Lösungsmittel mit Hilfe von hohen Druckdifferenzen durch spezielle Membranen angereichert werden. Beide Verfahrenswege sind verhältnismäßig teuer oder benötigen einen hohen Energieaufwand für den laufenden Betrieb. Außerdem lassen sich die organischen Dämpfe im allgemeinen nicht vollständig abtrennen, so daß häufig eine Nachverbrennung der Restgase erfolgen muß, um die TA-Luft einzuhalten.

Für die Rückgewinnung von Benzindämpfen aus Tankfahrzeugen sind in letzter Zeit Verfahren zur Tieftemperaturwäsche entwickelt worden, bei der die Benzindämpfe bei Temperaturen bis -45° C mit Benzin ausgewaschen werden. Die Restgase, die noch etwa 5 bis 20 % der ursprünglichen Benzindämpfe enthalten, werden in speziellen und teueren Öfen verbrannt. Die Wäsche erfolgt entweder im Gleichstrom oder im Gegenstrom mit kaltem Benzin, das in separaten Wärmetauschern abgekühlt wird. Im allgemeinen wird in zwei Stufen gewaschen, wobei in der ersten Stufe zur Vermeidung von Vereisungen des im Gas und auch in dem Waschbenzin enthaltenen Wassers nur bis ca. 0° C ausgewaschen wird. Die Kältetauscher für die Kühlung in der zweiten Stufe werden im allgemeinen doppelt ausgelegt, um nach einer Vereisung des einen Tauschers auf den anderen umzuschalten, wobei der erste inzwischen abgetaut wird. In beiden Stufen wird frisches Benzin mit geringem Gehalt an leichtflüchtigen Benzinanteilen zugeführt mit dem Ziel, die leichtflüchtigen Benzinanteile zu adsorbieren.

Die Gleichstromwäsche hat gegenüber der Gegenstromwäsche den Vorteil, daß das auskondensierte Benzin sowie das zusätzliche Waschbenzin an der jeweils kältesten Stelle des Wäschers abgezogen wird, an der die Löslichkeit der leichtflüchtigen Bestandteile im Waschbenzin am höchsten ist. Das Gegenstromverfahren hat demgegenüber einen etwas geringeren Energiebedarf für die Kälteerzeugung. Die vorzuhaltende Kälteleistung orientiert sich im Regelfall an dem maximalen Kältebedarf, obwohl gerade Benzindampfrückgewinnungsanlagen durch starke Lastschwankungen gekennzeichnet sind und der mittlere Lastfaktor im Regelfall deutlich unter 50 % der Maximalleistung liegt.

Die bisher vorgeschlagenen Anlagen für die Benzindampfrückgewinnung sind verhältnismäßig teuer und bislang nur in größeren Einheiten wirtschaftlich, wobei unter wirtschaftlich verstanden wird, daß das rückgewonnene Benzin die Kosten der Anlage deckt. Kleine Anlagen, die auch für kleine Tankläger oder sogar Tankstellen Anwendung finden, sind mit den bisher vorgeschlagenen Konzepten wirtschaftlich nicht zu realisieren.

Der Erfindung liegt daher die Aufgabe zugrunde, ein Verfahren und eine Vorrichtung zu schaffen, mit denen organische Dämpfe aus Gasen, insbesondere Benzindämpfe möglichst vollständig entfernt werden können, wobei die benötigte Leistung im Vergleich zu bekannten Verfahren gering sein soll und wobei auch für starke Lastschwankungen und kleinere Anlagen eine wirtschaftliche Realisierung gewährleistet sein soll. Diese Aufgabe wird erfindungsgemäß durch die kennzeichnenden Merkmale des Hauptanspruchs und des nebengeordneten Vorrichtungsanspruchs gelöst.

Dadurch, daß die mit organischen Dämpfen beladenen Gase, beispielsweise der Benzindampf, im Gleichstrom mit der Waschflüssigkeit, beispielsweise dem Waschbenzin gewaschen werden, die Kühlung des Gemisches aus Waschflüssigkeit und der beladenen Gase aber im Gegenstrom erfolgt, werden die Vorzüge von Gleichstrom- und Gegenstromwäsche kombiniert, da nämlich die auskondensierten Dämpfe und die Waschflüssigkeit an der kältesten Stelle des Wäschers, an der die Löslichkeit der leichtflüchtigen Teile am größten ist, abgezogen werden, so daß ein geringerer Volumenstrom der umlaufenden Waschflüssigkeit benötigt wird und da eine hohe Exergie durch die Kühlung im Gegenstrom erzielt wird und somit der Energiebedarf geringer ist.

Durch die in den Unteransprüchen angegebenen Maßnahmen sind vorteilhafte Weiterbildungen und Verbesserungen möglich. Da die am Boden des Wäschers abgezogene Waschflüssigkeit vor der erneuten Einspritzung in dem Wäscher durch einen Wärmetauscher vorerwärmt wird, kann man eine relativ hohe Temperaturdifferenz zwischen dem Vorlauf der Kühlflüssigkeit im unteren Bereich des Wäschers und ihrem Rücklauf im oberen Bereich realisieren, wodurch der Energiebedarf für die Kälteerzeugung verringert wird und der Volumenstrom der umlaufenden Kühlflüssigkeit kleingehalten werden kann. Durch die Verwendung des Kältespeichers kann eine Anpassung der vorzuhaltenden Kälteleistung an den mittleren Kältebedarf erfolgen, wodurch die benötigte Leistung drastisch gesenkt werden kann. Da die Menge der zuzuführenden Waschflüssigkeit durch Abziehen an der kältesten Stelle des Wäschers kleingehalten werden kann, kann auch die Größe und die Kosten der verwendeten Wärmetauscher verringert werden.

Durch Integration der im Kreuzgegenstrom geführten Kühlrohre in dem Wäscher ist die Kälteübertragung zwischen Kühlflüssigkeit und dem Gemisch aus beladenen Gasen und Waschflüssigkeit optimiert, da der Wärmeübergangskoeffizient bei beregneten Rohren sehr hoch ist und in etwa dem eines Flüssig-Flüssigwärmetauschers entspricht.

Durch eine Regelung der zugeführten Waschflüssigkeit in Abhängigkeit von der Benzindampfmenge und deren Gehalt an leichtflüchtigen Bestandteilen lassen sich konstante Bedingungen für das austretende Abgas realisieren, d.h. die leichtflüchtigen Anteile im austretenden Abgasstrom können konstant eingestellt werden.

Da die Temperaturdifferenzen zwischen Kühlkreislauf und dem Gemisch aus beladenen Gasen und Waschflüssigkeit gering sind, ist die Vereisungsgefahr an den beregneten Kühlrohren sehr gering. Auch an dem Wärmetauscher im Waschflüssigkeitskreislauf ist die Gefahr einer Vereisung sehr gering, da eventuell ausgefrorene Wasserpartikel am Boden des Wäschers als Eisschnee im Waschflüssigkeitskreislauf vorliegen, der im Wärmetauscher erwärmt wird.

Zusammenfassend sind die Vorteile dahingehend zu sehen, daß aufgrund der Optimierung der benötigten Kälteenergie der Kälterückführung und des benötigten Volumenstroms für die Kühlflüssigkeit und Waschflüssigkeit die einzelnen Teile der erfindungsgemäßen Vorrichtung kleiner und kostengünstiger ausgeführt werden können, so daß die Wirtschaftlichkeit auch bei großen Lastwechseln und für kleine Anlagen gegeben ist.

Ausführungsbeispiele der Erfindung sind in der Zeichnung dargestellt und werden in der nachfolgenden Beschreibung näher erläutert.
Es zeigen:

Fig. 1 ein erstes Ausführungsbeispiel der erfindungsgemäßen Vorrichtung unter Anwendung des erfindungsgemäßen Verfahrens, wobei ein Wäscher mit Kühlkreislauf und Kältespeicher und mit einem Waschflüssigkeitskreislauf vorgesehen ist, in dem ein externer Wärmetauscher zur Rückführung der Kälte in den Waschprozeß vorgesehen ist,

Fig. 2 ein weiteres Ausführungsbeispiel für die Anwendung des erfindungsgemäßen Verfahrens, bei dem der Wärmetauscher im Waschflüssigkeitskreislauf unter Rückführung der Kälte in den Waschprozeß in dem Wäscher integriert ist,

Fig. 3 ein weiteres Ausführungsbeispiel, bei dem zusätzlich eine Kälterückführung aus dem Abgas und der beladenen Waschflüssigkeit und eine Nachverbrennung vorgesehen sind,

Fig. 4 ein Ausführungsbeispiel gemäß Fig. 3, bei der zusätzlich in dem letzten Abkühlungsstadium in dem Wäscher ein getrenntes Kühlaggregat vorgesehen ist, dessen Kondensator in den Kältespeicher integriert ist,

Fig. 5 ein Ausführungsbeispiel einer Abgasnachverbrennung mit einer Regenerierfeuerung,

Fig. 6 ein Ausführungsbeispiel der erfindungsgemäßen Vorrichtung in einer Baueinheit für kleine Leistungen, und

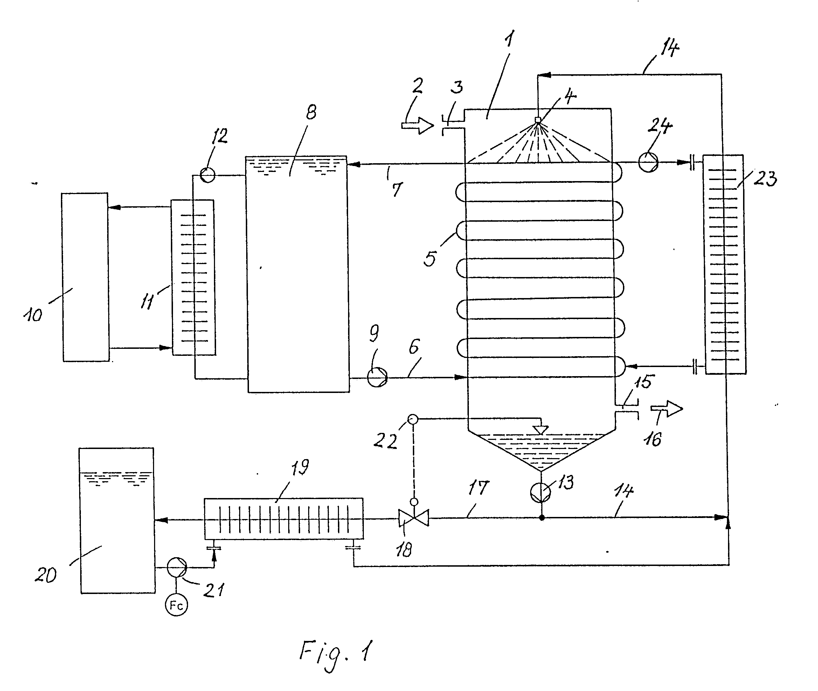

In Fig. 1 ist mit 1 ein Gleichstromwäscher dargestellt, dem das durch den Pfeil 2 gekennzeichnete beladene Gas, das im beschriebenen Ausführungsbeispiel Benzindampf sein soll, über die Zuleitung 3 im oberen Teil zugeführt wird. Im oberen Teil des Gleichstromwäschers 1 ist weiterhin mindestens eine Düse 4 zur Ein spritzung der Waschflüssigkeit, im Ausführungsbeispiel Waschbenzin, vorgesehen. Im Inneren des Gleichstromwäschers 1 sind im Kreuzgegenstrom Kühlrohre 5 angeordnet, in denen eine Kühlflüssigkeit geführt wird, wobei der Vorlauf 6 und der Rücklauf 7 mit einem Kältespeicher 8 verbunden sind. Der Kältevorrat im Kältespeicher 8 wird über eine ein- oder mehrstufige Kälteanlage 10 über einen Kältetauscher 11 übertragen, wobei die verhältnismäßig warme Kühlflüssigkeit vom Rücklauf 7 über eine Umwälzpumpe 12 dem Kältetauscher 11 zugeführt wird, in dem sie auf die tiefste Temperatur des Kältespeichers 8 abgekühlt und von unten in den Kältespeicher zurückgeführt wird. Der Kältespeicher 8 weist nicht dargestellte Vorrichtungen auf, die einer Rückvermischung der kalten mit der warmen Kühlflüssigkeit minimieren. In dem Vorlauf 6 ist eine Pumpe 9 vorgesehen, die die Kühlflüssigkeit im Gegenstrom zu dem Benzindampf 2 und der Waschflüssigkeit durch die Kühlrohre 5 pumpt.

Unterhalb des Gleichstromwäschers 1 ist eine Pumpe 13 angeordnet, die das im unteren Teil des Gleichstromwäschers 1 zusammenfließende Waschbenzin abzieht und in einen Waschbenzinkreislauf 14 zurückführt. Oberhalb des Flüssigkeitsspiegels ist ein Auslaß 15 für das weitgehend von Benzindampf befreite Abgas 16 vorgesehen. Die Pumpe 13 steht außerdem mit einer Rückführleitung 17 in Verbindung, die über ein Ventil 18 und einen Kältetauscher 19 in einen Vorratstank 20 mündet. Aus dem Vorratstank 20 wird über eine geregelte Pumpe 21 und über den Kältetauscher 19 frisches Waschbenzin in den Waschbenzinkreislauf 14 geleitet. Weiterhin ist eine Füllstandsregelung 22 vorgesehen, die über das Ventil 18 und die geregelte Pumpe 21 das frische Waschbenzin abhängig vom Adsorptionsbedarf und die abgezogene Waschbenzinmenge abhängig von der zugeführten frischen Waschbenzinmenge und der auskondensierten bzw. adsorbierten Menge regelt.

In den Waschbenzinkreislauf 14 ist ein Wärmetauscher 23 geschaltet, der das kalte zurückgeführte Waschbenzin im Waschbenzinkreislauf auf etwa die Temperatur des über die Zuleitung 3 zugeführten Benzindampfes 2 erwärmt. Dabei ist der Wärmetauscher 23 über eine Pumpe 24 mit den Kühlrohren 5 des Rücklaufs 7 des Kältekreislaufes und denen des Vorlaufs 6 verbunden.

Der Benzindampf 2 wird über die Zuleitung 3 in den Wäscher 1 geführt und zusammen mit dem Waschbenzin, das im oberen Bereich etwa die gleiche Temperatur aufweist, über die Kühlrohre 5 des Kühlkreislaufes geführt. Es erfolgt somit eine Wäsche im Gleichstrom von Benzindampf und Waschbenzin, wobei die Benzindämpfe auskondensieren und das von den Benzindämpfen weitgehend befreite Abgas 16 kann über die Ableitung 15 abgezogen werden. Die Kühlung erfolgt über die in den Kühlrohren 5 durch den Wäscher 1 im Gegenstrom geführten Kühlflüssigkeit, die aus dem Kältespeicher 8 geliefert wird. Dabei ist die in dem Kältespeicher vorzu haltende Leistung auf den mittleren Kältebedarf der Anlage angepaßt. Der Waschbenzinkreislauf 14 wird über die Pumpe am Boden des Wäschers 1 aufrechterhalten, wobei eine Teilmenge in den Vorratstank 20 zurückgeleitet wird. Die Kälte der zurückgeleiteten Waschbenzinmenge wird in dem Kältetauscher an das frische Waschbenzin übertragen. Um die Exergie des Kältekreislaufes zu optimieren, wird das im Waschbenzinkreislauf 14 zurückgeführte Waschbenzin mittels der schon in den Kühlrohren 5 des Gleichstromwäschers 1 erwärmten Kühlflüssigkeit in dem Wärmetauscher 23 erwärmt, wobei die Kühlflüssigkeit in den Vorlauf 6 zurückgeführt wird und somit die von dem Waschbenzin abgegebene Kälte an den Wasch- und Kühlvorgang zurückgibt. Für eine vollständige Verhinderung der Vereisung können die Kühlrohre 5 mit Teflon oder einem entsprechend anderen Material beschichtet werden.

Der Kältetauscher 19 kann relativ klein ausgebildet sein, wodurch auch seine Kosten gering sind, da die Menge des zuzuführenden Waschbenzins verfahrensbedingt, d.h. wegen der Ableitung des Waschbenzins an der kältesten Stelle des Wäschers, an der die Löslichkeit der leichtflüchtigen Benzinbestandteile am höchsten ist, gering ist.

In der beschriebenen Ausführung wird Benzin aus Benzindämpfen rückgewonnen, selbstverständlich ist die Vorrichtung bzw. das Verfahren auch für andere Lösungsmittel anwendbar.

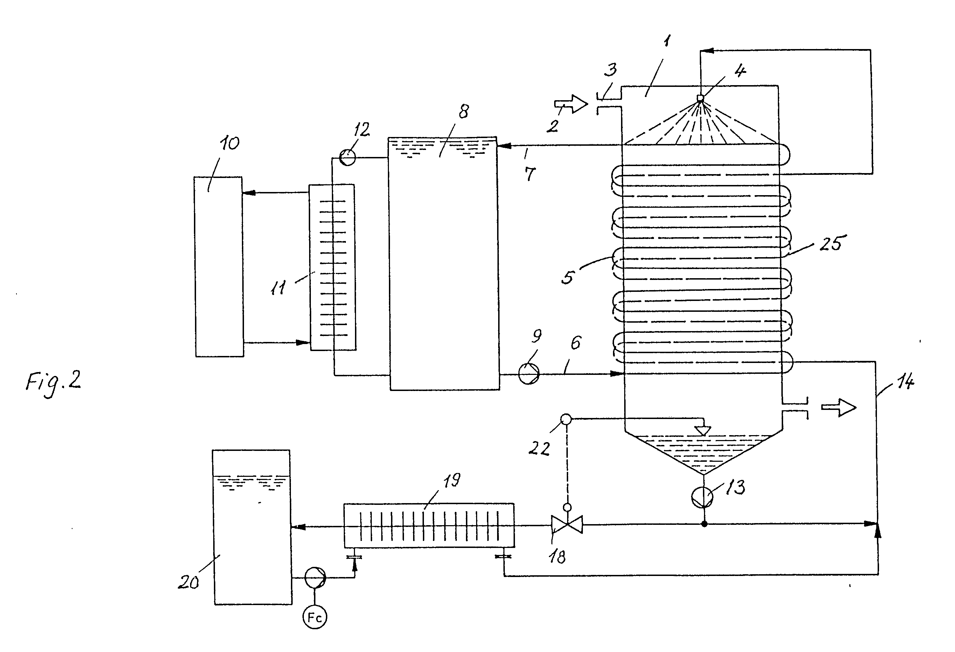

Die in Fig. 2 dargestellte Vorrichtung unterscheidet sich von der Vorrichtung nach Fig. 1 dadurch, daß kein externer Wärmetauscher 23 vorgesehen ist, sondern der Wärmetauscher ist ebenfalls in den Wäscher 1 integriert. Die Rohre 25, in denen das Waschbenzin des Waschbenzinkreislaufes 14 zurückgeführt wird, sind entsprechend den Kühlrohren 5 in den Wäscher eingebaut und bilden so einen in den Wäscher integrierten Rieselkühler. Vor der erneuten Einspritzung wird somit das in den beregneten Rohren 25 geführte Waschbenzin erwärmt, wobei es seine Kälte in den Waschprozeß zurückgibt. Diese Form der Integration des Wärmetauschers ist hinsichtlich der Leistung und Kosten günstiger als der Wärmetauscher 23 nach Fig. 1.

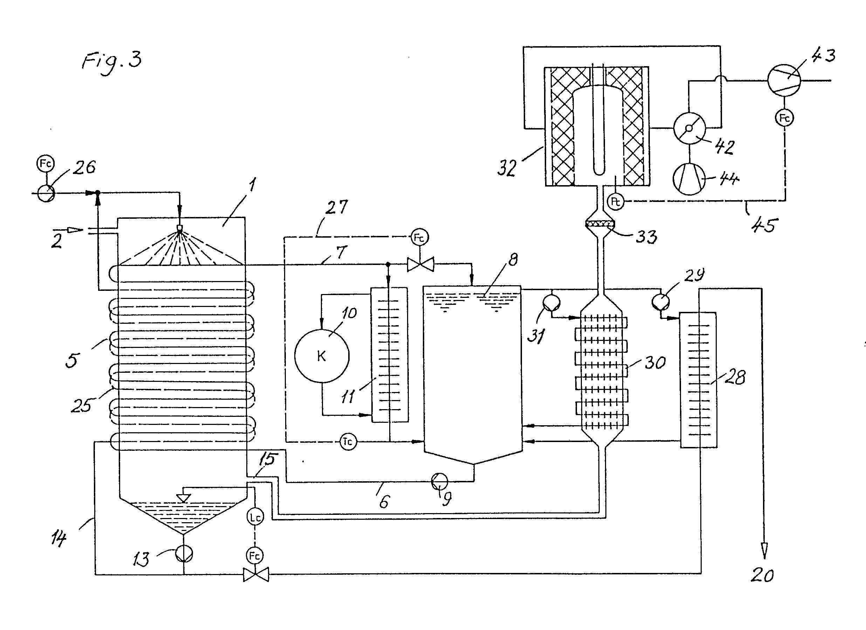

In Fig. 3 ist eine erweiterte Ausführung der Vorrichtung nach Fig. 2 dargestellt, bei der zusätzlich eine Kälterückführung aus dem Abgas und der Rückführung der beladenen Waschbenzinmenge sowie eine Nachverbrennung vorgesehen ist. Das frische Waschbenzin wird mittels einer geregelten Pumpe 25 kurz vor der Einspritzung in den Waschkreislauf 14 zugeführt. Die Benzindämpfe werden etwa mit einer Temperatur von 20 °C in den Wäscher 1 geleitet, mit dem eingespritzten Waschbenzin vermischt und über die Kühlrohre 5 und die Rohre 25 des zurückgeführten Waschbenzins gekühlt. Die Kühlflüssigkeit im Rücklauf hat etwa eine Temperatur von 14 °C. Da die Vereisungsgefahr der außen beregneten Kühlrohre 9 gering ist, kann die Abkühlung des Benzindampfes bzw. des Waschbenzins in einer Waschstufe auf -40 °C erfolgen. Bei

diesem Ausführungsbeispiel wird der Kühlkreislauf zusätzlich über eine Bypassregelung 27 durch den mit der ein- oder mehrstufigen Kälteanlage 10 verbundenen Kältetauscher geführt, um die Kühlleistung weiterhin zu verbessern. Die in den Vorratsbehälter 20 zurückgeführte beladene Waschbenzinmenge wird wiederum durch einen Kältetauscher 28 geleitet, wobei dieser Kältetauscher 28 mit dem Kältespeicher 8 verbunden ist. Ein Teil der Rücklaufkühlflüssigkeit des Kühlkreislaufes wird über eine Pumpe 29 im Gegenstrom durch den Kältetauscher 28 gepumpt und strömt in den Kältespeicher 8 zurück.

In diesem Ausführungsbeispiel wird auch die in dem Abgas 3 vorhandene Kälte genutzt, indem das Abgas 3 durch einen weiteren Wärmetauscher 30 geführt wird. Dabei wird wiederum ein Teil der Rücklaufkühlflüssigkeit von einer Pumpe 31 im Kreuzgegenstrom durch den Wärmetauscher 30 geführt und in den Kältespeicher 8 zurückgeleitet.

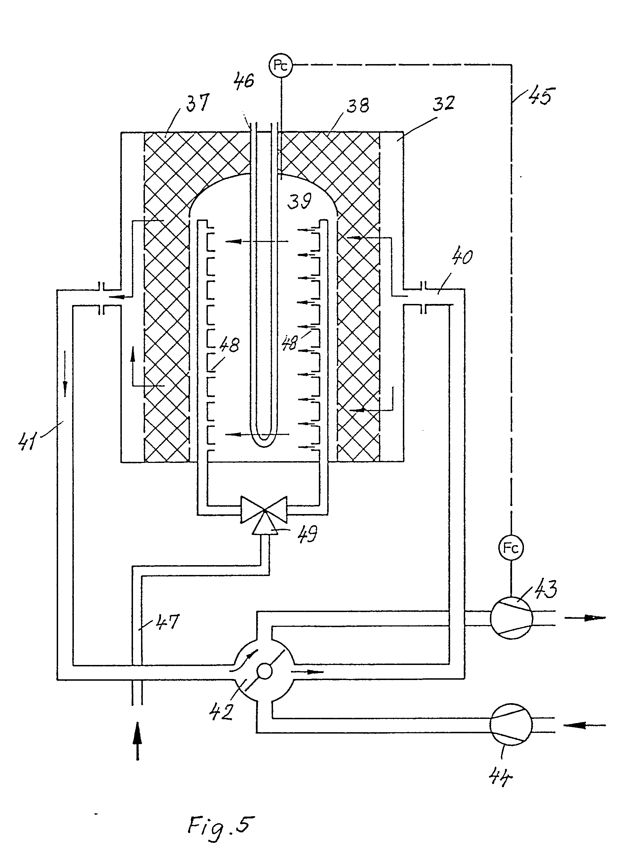

Sollten in dem Abgas noch Benzinbestandteile vorhanden sein, so können diese in einer dem Wärmetauscher 30 nachgeschalteten Feuerung 32 verbrannt werden, die über Flammsperren 33 vom Waschvorgang abgetrennt ist. Die Feuerung 32 wird näher in Fig. 5 beschrieben.

Durch diese Anordnung nach Fig. 3 wird die Vereisungsgefahr des Kältetauschers 28 stark reduziert und es ergibt sich der Vorteil einer sehr guten Kälterückführung aus dem Abgas und dem beladenen Waschbenzin.

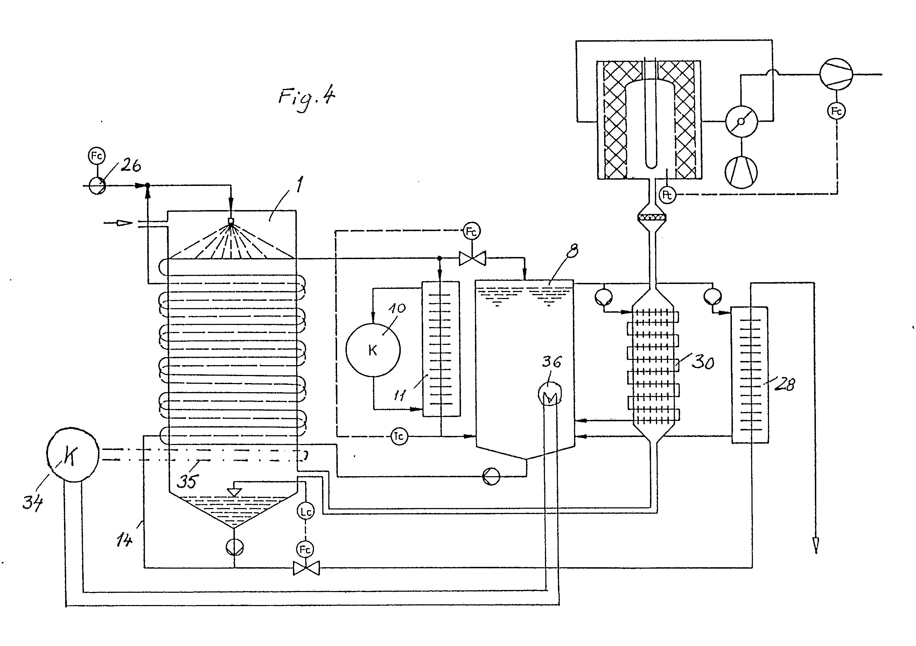

In Fig. 4 ist ein Ausführungsbeispiel entsprechend Fig. 3 dargestellt, wobei hier zusätzlich ein Kühlaggregat 34 vorgesehen ist, dessen Verdampfer 35 im unteren Teil des Wäschers 1 angeordnet ist und die letzte Abkühlungsstufe im Wäscher bildet. Der Kondensator 36 des Kühlaggregats 34 ist dabei in den Kältespeicher 8 integriert. Durch diese Anordnung kann das Temperaturniveau im Kältespeicher 8 etwas erhöht werden, was für die Auslegung des Arbeitsbereiches der Kälteanlage 10 günstiger ist.

In Fig. 5 ist die Regenerierfeuerung 32 für die Benzindampfnachverbrennung dargestellt. Die Regenerierfeuerung 32 weist zwei Festbettregeneratoren 37, 38 auf, die einen Feuerungsraum 39 umhüllen. Über Rohrleitungen 40, 41 wird den Festbettregeneratoren 37, 38 Spülluft zugeführt bzw. abgeführt. Die Zu- bzw. Abführung der Spülluft wird über einen Vierwegehahn 42 gesteuert, wobei die Luft mit Hilfe von Gebläsen 43, 44 gefördert wird. Um die Wärmespeicherfähigkeit der Festbettregeneratoren 37, 38 gut ausnützen zu können, wird die Strömungsrichtung der Spülluft über den Vierwegehahn periodisch gewechselt. Mit Hilfe einer Druckregelung 45 wird ein leichter Unterdruck in dem Feuerungsraum 39 eingestellt. Der Feuerungsraum 39 wird vorzugsweise mit einer elektrischen Heizung 46 beheizt. Die Regenerierfeuerung 26 ist so ausgelegt, daß die aus den Festbettregeneratoren 37, 38 austretende Luft nur ca. 10 bis 20 ° wärmer als die eintretende Luft ist und die Temperatur im Feuerungsraum 39 von ca. 850 °C mit geringstem Energieaufwand auch ohne Benzindampfeinführung aufrechterhalten werden kann. Der Benzindampf wird über eine Leitung 47 und Verteilrohre 48 direkt in den Feuerungsraum 39 eingeführt. In dem dargestellten Ausführungsbeispiel ist zusätzlich ein Dreiwegeventil 49 vorgesehen, das derart gesteuert wird, daß je nach Taktzyklus der Benzindampf im Eintrittsbereich der Luft in den Feuerungsraum 39 eingeleitet wird.

Die bei der Verbrennung der Benzinbestandteile freiwerdende Wärme wird zunächst in den Festbettregeneratoren zwischengespeichert und anschließend mit den Abgasen abgegeben. Zusätzlich können Wärmetauscher vorgesehen sein, die die mit den Abgasen mitgeführte Wärme nutzbringend auskoppeln.

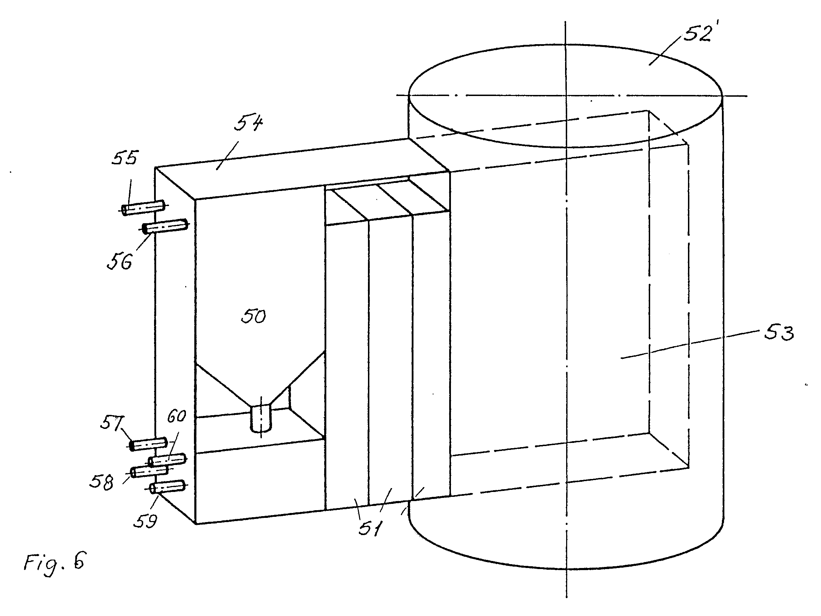

In Fig. 6 ist eine Vorrichtung zur Rückgewinnung von Benzindämpfen nach dem oben beschriebenen Verfahren als Baueinheit für kleine Leistungen dargestellt. Dabei sind der Wäscher 50 und die weiteren Aggregate 51, wie Wärme- bzw. Kältetauscher und Kälteanlage in einen Wärmespeicher 52 eingebaut. Dazu ist in dem Kältespeicher 52 ein Hohlraum 53 vorgesehen und der Wäscher 50 und die Aggregate 51 sind auf einem Rahmen 54 angeordnet, wobei der Rahmen 54 auf nicht dargestellten Schienen bzw. Führungen oder einem Schlitten in den Hohlraum 53 einschiebbar ist. An dem Rahmen 54 sind die verschiedenen Zu- bzw. Ableitungen für die Benzindampfzufuhr 55 und -ausfuhr 56, Benzinzuleitung 57 und -ableitung 58, Waschbenzinabsaugung 59 und -einspritzung 60 vorgesehen. Die Montage und Wartung sind einfach und die Bauart ist besonders bei kleinen Anlagen kostengünstig, wobei die Betriebskosten infolge geringer Kälteverluste auch bei Stillstandsphasen minimiert sind. Diese Bauart ist auch für einzelne Tankstellen geeignet.

## Patentansprüche

1. Verfahren zur Rückgewinnung von organischen Dämpfen aus Gasen, insbesondere von Benzindämpfen, bei dem die beladenen Gase in einem als Rieselkühler ausgebildeten Wäscher mit einer Waschflüssigkeit gewaschen werden und die organischen Dämpfe unter Kühlung des Gemisches aus beladenen Gasen und Waschflüssigkeit auskondensiert werden,
**dadurch gekennzeichnet,**
daß die beladenen Gase im Gleichstrom von Gasen und Waschflüssigkeit gewaschen werden und das Gemisch aus Gasen und Waschflüssigkeit im Gegenstrom gekühlt wird.

2. Verfahren nach Anspruch 1, dadurch gekennzeichnet, daß die Abkühlung des Gemisches aus organischen Dämpfen und Waschflüssigkeit über die berieselten Rohre im Wäscher mittels eines Kühlkreislaufes mit Kältespeicher durchgeführt wird.

3. Verfahren nach Anspruch 1 oder 2, dadurch gekennzeichnet, daß nach der Wäsche die Waschflüssigkeit am Boden des Wäschers abgezogen wird und wieder in den Gleichstromwaschvorgang eingespritzt wird, wobei vor der erneuten Einspritzung die kalte Waschflüssigkeit vorerwärmt wird und die dabei abgeführte Kälte zur Kühlung des Gemisches aus beladenen Gasen und Waschflüssigkeit verwendet wird.

4. Verfahren nach Anspruch 3, dadurch gekennzeichnet, daß die kalte abgezogene Waschflüssigkeit bis nahe an die Eintritts temperatur der beladenen Gase vorerwärmt wird.

5. Verfahren nach einem der Ansprüche 1 bis 4, dadurch gekennzeichnet, daß frische Waschflüssigkeit proportional zum Durchsatz an leichtflüchtigen Gasbestandteilen dem Waschflüssigkeitskreislauf zugeführt wird.

6. Verfahren nach Anspruch 5, dadurch gekennzeichnet, daß die Menge der frischen Waschflüssigkeit zuzüglich der auskondensierten bzw. adsorbierten Menge über eine Füllstandsregelung am Boden des Wäschers aus dem Waschflüssigkeitskreislauf abgezogen wird.

7. Verfahren nach Anspruch 6, dadurch gekennzeichnet, daß die Kälteenergie der abgezogenen Menge zur Kühlung der frischen Waschflüssigkeit im Gegenstrom verwendet wird.

8. Verfahren nach Anspruch 7, dadurch gekennzeichnet, daß die Kälteenergie der abgezogenen Menge über einen Gegenstromwärmetauscher an den Kältespeicher übertragen wird, wobei jeweils die wärmste Flüssigkeitsschicht des Kältespeichers durch den Gegenstromwärmetauscher geführt wird.

9. Verfahren nach einem der Ansprüche 1 bis 8, dadurch gekennzeichnet, daß die in dem kalten Abgas enthaltende Kälteenergie im Gegenstrom und Bypass zum Kühlkreislauf in diesen zurückgeführt wird.

10. Verfahren nach einem der Ansprüche 1 bis 9, dadurch gekennzeichnet, daß das Abgas direkt in den beheizten Feuerungsraum einer Regenerierfeuerung geleitet und dort unter Zuführung von Spülluft nachverbrannt wird, wobei die Wärme der Verbrennungsgase in den Feuerungsraum umgebenden Regeneratoren zwischengespeichert wird.

11. Verfahren nach Anspruch 10, dadurch gekennzeichnet, daß in dem Feuerungsraum ein leichter Unterdruck eingeregelt wird.

12. Vorrichtung zur Durchführung des Verfahrens nach Anspruch 1, dadurch gekennzeichnet, daß ein Gleichstromwäscher (1) vorgesehen ist, der in seinem oberen Teil mindestens eine Zuleitung (3) für das beladene Gas (2) und mindestens eine Düse (4) zum Verteilen der Waschflüssigkeit und in seinem unteren Teil einen Auslaß (15) für das Abgas (16) und eine Ableitung für die Waschflüssigkeit aufweist, wobei zwischen Ableitung und Düse zur Bildung eines Waschbenzinkreislaufes (14) eine Rückführleitung vorgesehen ist, und daß in dem Gleichstromwäscher (1) Kühlrohre (5) derart angeordnet sind, daß die Kühlflüssigkeit im Gegenstrom zu dem Gemisch aus beladenen Gasen und Waschflüssigkeit geführt wird.

13. Vorrichtung nach Anspruch 12, dadurch gekennzeichnet, daß die Kühlrohre (5) an einen Kühlkreislauf angeschlossen sind, der eine Kälteanlage (10,11) und einen Kältespeicher (8) aufweist, wobei Kälteanlage und Kältespeicher derart ausgelegt sind, daß die vorzuhaltende Kälteleistung dem mittleren Kältebedarf angepaßt ist.

14. Vorrichtung nach Anspruch 12 oder 13, dadurch gekennzeichnet, daß in die Rückführleitung des Waschflüssigkeitskreislaufes (14) zur Rückführung der Kälte der Waschflüssigkeit in den Kühlkreislauf ein externer Flüssig-Flüssiggegenstromwärmetauscher (23) geschaltet ist, der mit dem Rücklauf (7) und Vorlauf (6) des Kühlkreislaufs verbunden ist.

15. Vorrichtung nach Anspruch 12 oder 13, dadurch gekennzeichnet, daß die Rückführleitung (25) zur Rückführung der Kälte der Waschflüssigkeit in den Wäscher (1) integriert ist und Bestandteil eines Rieselkühlers ist.

16. Vorrichtung nach einem der Ansprüche 12 bis 15, dadurch gekennzeichnet, daß eine Füllstandsregelung (22) vorgesehen ist, die den Abzug von beladener Waschflüssigkeit und die Zufuhr von frischer Waschflüssigkeit regelt, wobei in die Abzugleitung (17) der beladenen Waschflüssigkeit zu einem Vorratsbehälter (20) ein Gegenstromwärmetauscher (19) geschaltet ist.

17. Vorrichtung nach Anspruch 16, dadurch gekennzeichnet, daß frische Waschflüssigkeit durch den Gegenstromwärmetauscher (19) geführt ist.

18. Vorrichtung nach Anspruch 16, dadurch gekennzeichnet, daß der Gegenstromwärmetauscher (28) im Bypass zum Kältespeicher (8) geschaltet ist.

19. Vorrichtung nach einem der Ansprüche 12 bis 18, dadurch gekennzeichnet, daß an den Auslaß (15) für das kalte Abgas (16) ein Gegenstromwärmetauscher (30) geschaltet ist, der im Bypass zum Kältespeicher (8) angeordnet ist.

20. Vorrichtung nach einem der Ansprüche 12 bis 19, dadurch gekennzeichnet, daß ein zusätzliches Kälteaggregat (34) vorgesehen ist, dessen Verdampfungsrohre (35) in dem unteren Bereich des Wäschers (1) angeordnet sind und dessen Kondensator (36) in den Kältespeicher (8) integriert ist.

21. Vorrichtung nach einem der Ansprüche 12 bis 20, dadurch gekennzeichnet, daß die in dem Wäscher (1) angeordneten Kühlrohre (5) mit Teflon oder einem ähnlichen Material beschichtet sind.

22. Vorrichtung nach einem der Ansprüche 12 bis 21, dadurch gekennzeichnet, daß der Auslaß (15) für das kalte Abgas (16) mit einer Regenerierfeuerung (22) in Verbindung steht, die einen von zwei Festbettregeneratoren (37,38) weitgehend umhüllten, mit einer Heizung (46) versehen Feuerungsraum (39) aufweist, in dem die Abgase über Ver teilerrohre (48) direkt eingeleitet werden, wobei Gebläse (43,44) zur Zufuhr von Spülluft bzw. zum Abzug der Verbrennungsgase gemischt mit Spülluft durch die Festbettregeneratoren (37,38) hindurch vorgesehen sind.

23. Vorrichtung nach einem der Ansprüche 12 bis 22, dadurch gekennzeichnet, daß der Wäscher (50),die Wärmetauscher und die Kälteanlage (51), eine Einheit bildend, in den Kältespeicher (52) eingebaut sind.

24. Vorrichtung nach Anspruch 23, dadurch gekennzeichnet, daß der Wäscher (50), die Wärmetauscher und die Kälteanlage (51) auf einem beweglich gelagerten Rahmen (54) aufgebaut sind, der auf einem Schlitten oder auf Schienen in den Kältespeicher (52) einschiebbar bzw. aus diesem herausziehbar ist.

Fig. 1

Fig. 2

Fig.3

EP 0 354 866 A1

Fig. 4

Fig.5

Fig. 6

55
56
54
57
58
59
60
50
51
52'
53

EP 0 354 866 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-2 341 281 (F. McGOVERN) <br> * Figur 1 * <br> --- | 1,12 | B 01 D 53/00 <br> B 01 D 5/00 <br> B 01 D 53/14 |
| A | US-A-4 227 897 (R. REED) <br> * Figur 1; Ansprüche * <br> --- | 1,10 | |
| A | US-A-3 232 029 (W. EVANS) <br> --- | | |
| A | DE-A-2 837 892 (ROSENBLAD CORP.) <br> --- | | |
| A | DE-A-3 509 782 (SEP) <br> --- | | |
| A | GB-A-2 118 448 (A. STEINECKER MASCHINENFABRIK) <br> --- | | |
| A | DE-C- 485 500 (CHENINOVA) <br> --- | | |
| A | GB-A-2 126 496 (M. REILLY) <br> ----- | | |

**RECHERCHIERTE SACHGEBIETE (Int. Cl.5)**

B 01 D

Der vorliegende Recherchenbericht wurde für alle Patentansprüche erstellt

| Recherchenort | Abschlußdatum der Recherche | Prüfer |
|---|---|---|
| DEN HAAG | 02-11-1989 | KANOLDT W.W. |

EPO FORM 1503 03.82 (P0403)